(19) Europäisches Patentamt / European Patent Office / Office européen des brevets

(11) **EP 3 343 784 B1**

(12) **FASCICULE DE BREVET EUROPEEN**

(45) Date de publication et mention de la délivrance du brevet:
**24.06.2020 Bulletin 2020/26**

(51) Int Cl.:
**H04B 1/10** *(2006.01)*          **H04L 25/02** *(2006.01)*
**H04B 7/08** *(2006.01)*

(21) Numéro de dépôt: **17209588.7**

(22) Date de dépôt: **21.12.2017**

(54) **PROCEDE DE LUTTE ANTI-INTERFERENCES PAR FILTRAGE SPATIAL OU FILTRAGE SPATIO-TEMPOREL DANS UN RECEPTEUR MULTI-VOIES**

VERFAHREN ZUR ANWENDUNG VON ENTSTÖRUNGSMASSNAHMEN DURCH RÄUMLICHE ODER RÄUMLICH-ZEITLICHE FILTERUNG IN EINEM MEHRWEG-EMPFÄNGER

METHOD TO PREVENT INTERFERENCE BY SPATIAL FILTERING OR SPATIO-TEMPORAL FILTERING IN A MULTI-CHANNEL RECEIVER

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **29.12.2016 FR 1601894**

(43) Date de publication de la demande:
**04.07.2018 Bulletin 2018/27**

(73) Titulaire: **Thales**
**92400 Courbevoie (FR)**

(72) Inventeur: **PIPON, François**
**92622 GENNEVILLIERS Cedex (FR)**

(74) Mandataire: **Bell, Mark**
**Marks & Clerk France**
**Immeuble «Visium»**
**22, avenue Aristide Briand**
**94117 Arcueil Cedex (FR)**

(56) Documents cités:
**EP-A1- 0 867 079     US-A- 6 118 832**

**Description**

L'invention se situe dans le domaine du traitement d'antennes, et concerne un procédé de réception dans un récepteur multivoies, ainsi qu'un récepteur mettant en œuvre le procédé. L'invention s'applique aux radiocommunications, en particulier les radiocommunications militaires, quelle que soit la configuration (sol-sol, sol-air ou air-air), sans limitation d'emploi concernant la bande de fréquence, et plus particulièrement dans la bande HF (acronyme pour Hautes Fréquences), UHF (acronyme pour Ultra Hautes Fréquences), ou la bande C (de 4GHz à 8GHz). Elle s'applique en particulier aux transmissions radios pour lesquelles un signal est reçu en présence d'interférences, qu'elles soient intentionnelles ou non, lorsque le récepteur comprend plusieurs antennes de réception.

Lors de la propagation d'un signal radioélectrique, issu de la modulation en phase, en fréquence et/ou en amplitude d'une porteuse par une suite de symboles, celui-ci se trouve soumis à plusieurs sources de dégradations.

Parmi ces sources de dégradations, se trouve le bruit intrinsèque au récepteur, qui peut être modélisé comme un Bruit Blanc Gaussien. Lorsque le signal est reçu sur plusieurs capteurs (ou antennes), le bruit est supposé blanc spatialement (indépendance entre les capteurs) et temporellement (indépendance dans le temps) et la matrice $R$ de corrélation du bruit peut s'écrire $R = \text{diag}(\sigma_k^2)$, avec $\sigma_k^2$ la puissance de bruit reçue sur le capteur $k$.

Parmi ces sources de dégradations se trouvent également les trajets liés aux réflexions multiples de l'onde électromagnétique lors de sa propagation. Ces multi-trajets sont dus aux réflexions sur les divers éléments de l'environnement, comme les bâtiments ou le relief terrestre, mais peuvent également provenir, comme c'est souvent le cas lorsque l'on traite de transmissions HF, de réflexions sur les différentes couches ionosphériques de l'atmosphère. Ces réflexions génèrent des répliques du signal, décalées en temps, en phase et/ou en amplitude. Lorsque les multi-trajets sont reçus dans un intervalle de temps inférieur à la durée d'un symbole, ils peuvent se sommer de manière constructive ou destructive. On parle alors de fading plat (en anglais flat fading), qui requiert, pour améliorer la qualité de la réception, la mise en œuvre de techniques permettant d'apporter de la diversité au signal :

- diversité temporelle en cas de mobilité, obtenue par le biais d'un entrelacement et d'un codage des données sur une durée plus importante que le temps de cohérence du canal de propagation,

- diversité fréquentielle obtenue par le biais d'un mécanisme de saut de fréquence et de codage des données, ou

- diversité spatiale obtenue par l'utilisation d'une pluralité d'antennes d'émission et/ou de réception judicieusement espacées.

Lorsque les multi-trajets sont reçus dans un intervalle de temps supérieur à la durée d'un symbole, ils génèrent des interférences inter-symboles qui viennent dégrader la qualité de la liaison radio : on parle alors de fading sélectif (en anglais selective fading). Pour remédier à ce problème, il est nécessaire d'avoir recours à des techniques de codage canal, permettant d'améliorer la robustesse du signal, à des techniques d'égalisation, cherchant à estimer le canal de propagation et à recombiner en temps et en phase les différents trajets, ou à des techniques de traitement d'antenne, visant à optimiser la réception des différents trajets utiles en recombinant de façon efficace les signaux issus des différentes antennes de réception.

Enfin, parmi ces sources de dégradations, se trouvent les interférences liées au brouillage, qu'il soit volontaire (brouillage intentionnel large bande par exemple) ou involontaire (autres signaux transmis dans la même ressource fréquentielle). Des traitements spécifiques à la lutte contre le brouillage sont alors nécessaires, comme le codage correcteur d'erreur, l'excision de brouilleurs par filtrage à encoches, l'évasion de fréquence ou encore les techniques de traitement d'antenne qui visent à recombiner les signaux reçus sur un réseau de capteurs pour éliminer l'influence des interférences tout en optimisant la réception du signal utile.

Parmi l'ensemble des techniques permettant de lutter contre les différentes sources de dégradations affectant la réception d'un signal utile, les techniques de traitement d'antenne, ou traitements multivoies, sont les plus prometteuses, puisqu'elles permettent, par un traitement des signaux reçus sur les différentes antennes d'un réseau, d'optimiser la réception du signal utile en présence de fading plat, de fading sélectif et d'interférences.

Les traitements monovoie, ou SISO (acronyme anglais pour Single Input Single Output), comme l'égalisation ou le codage canal, présentent leurs limites dès lors que le niveau des interférences devient trop important ou que les conditions de propagation sont trop complexes (fading plat alors que la bande de cohérence du canal est supérieure à la bande de saut de fréquence, fading sélectif dont l'étalement des trajets est trop important pour pouvoir être égalisé, interférences large bande, etc.). Il est alors nécessaire de les combiner avec des traitements multivoies, l'exploitation de la diversité spatiale apportée par l'utilisation de plusieurs antennes permettant de tirer profit de la différence entre les canaux de transmission relatifs à chaque antenne.

Parmi les traitements multivoies, on distingue les traitements pour lesquels la diversité d'antenne est apportée à l'émission, appelés traitements MISO (acronyme anglais pour Multiple Input Single Output), les traitements pour lesquels la diversité d'antenne est apportée à la réception, appelés traitements SIMO (acronyme anglais pour Single Input Multiple Output), et les traitements pour lesquels la diversité d'antenne est apportée à la fois à l'émission et à la réception, appelés traitements MIMO (acronyme anglais pour Multiple Input Multiple Output).

L'invention concerne les traitements SIMO.

En l'absence d'interférence, différents traitements d'antenne SIMO peuvent être envisagés en fonction des caractéristiques du canal de propagation utile.

Lorsque le fading est « plat » (absence d'interférence entre symboles), le traitement SIMO optimal est le traitement dit de MRC (acronyme anglais pour Maximal Ratio-Combining, ou combinaison à rapport maximal). Dans un poste de réception multivoies MRC, les signaux issus des différentes voies de réception sont recombinés en phase et en amplitude, de manière à maximiser le rapport signal à bruit (en anglais Signal over Noise Ratio, ou SNR) du signal utile. Ainsi, en présence d'un bruit blanc spatialement et temporellement (c'est-à-dire en l'absence d'interférences), et pour un fading plat (absence d'interférences entre symboles), le traitement de MRC permet une exploitation optimale de la diversité spatiale.

Lorsque le fading est « sélectif » en fréquence (présence d'interférences entre symboles), le récepteur MRC voit ses performances se dégrader et la mise en œuvre d'une technique d'égalisation multivoies est nécessaire. Plusieurs solutions d'égalisation multivoies ont été proposées dans la littérature.

Certaines de ces solutions d'égalisation sont dites « non anti-brouillées », c'est-à-dire qu'elles sont conçues pour fonctionner en l'absence de brouilleurs. Le bruit présent sur chacune des voies est donc blanc temporellement, et non corrélé entre les voies (donc blanc spatialement).

Parmi ces techniques, la solution optimale au sens du maximum de vraisemblance est le récepteur basé sur le Filtre Adapté Spatio-Temporel en Bruit Blanc Spatialement et Temporellement (FAST-BBST) suivi d'un organe de décision basé sur un algorithme de Viterbi. Le FAST-BBST consiste à effectuer une estimation du canal de propagation puis un filtrage adapté au canal de propagation sur chacune des voies de réception, puis à sommer les signaux obtenus en sortie des filtres adaptés. En sortie de FAST-BBST, le rapport signal à bruit est maximisé sur le symbole courant et l'interférence entre symboles résiduelle est traitée par un algorithme de Viterbi. Ce récepteur est optimal en absence d'interférences, que le fading soit sélectif ou qu'il soit plat.

Cependant, les performances du FAST-BBST ne sont plus satisfaisantes dès lors que le signal reçu contient des interférences qui ne sont pas des interférences bandes étroites. La mise en œuvre d'autres types de traitements SIMO est alors nécessaire.

Pour permettre un fonctionnement en présence d'interférences, c'est à dire dans un environnement brouillé pour lequel le bruit reçu sur les différentes voies n'est plus blanc spatialement, sont connues des méthodes d'égalisation multivoies dites « anti-brouillées ». Ces méthodes intègrent des techniques spécialement dédiées à la lutte contre les interférences liées au brouillage et les bruits non blancs spatialement. Elles sont également connues sous le nom de techniques de filtrage d'antenne (dans cette dénomination, une antenne est composée de plusieurs antennes élémentaires et le filtrage d'antenne vise à recombiner les signaux issus de ces différentes antennes élémentaires de façon à optimiser la réception du signal utile en présence d'interférences), ou encore d'antenne adaptative (pour souligner le fait que les traitements sont capables de s'adapter automatiquement aux évolutions des conditions de propagation et d'interférence).

Ces techniques ont été développées à partir des années 60. Dans un premier temps, elles étaient basées sur un filtrage spatial (donc sans notion d'égalisation) des signaux reçus, c'est-à-dire avec une pondération amplitude/phase sur chaque capteur. Puis à partir des années 80/90, des structures spatio-temporelles, permettant une véritable égalisation multivoies des signaux reçus, ont été proposées, afin de suivre l'évolution des formes d'onde et l'augmentation des largeurs de bande des modulations.

Ainsi, la structure la plus simple permettant de lutter contre les interférences est une structure spatiale dont les poids complexes sur chacun des capteurs sont adaptés par un critère de minimisation d'une Erreur Quadratique Moyenne (EQM) entre le signal de sortie de l'antenne et un signal réplique. Une telle antenne, dénommée FASR (Filtre Adapté Spatial adapté à l'aide d'une Réplique), permet la réjection des brouilleurs, mais en présence de multitrajets de propagation utiles :

- elle "pointe" dans la direction de l'un des trajets (celui qui est corrélé avec la réplique), c'est-à-dire qu'elle remet en phase les contributions de ce trajet sur les différents capteurs. Lorsque l'antenne est composée de capteurs omnidirectionnels, le gain en rapport signal à bruit attendu est de l'ordre de $10 \log K$, où K est le nombre de capteurs utilisés,

- elle cherche à rejeter les trajets décorrélés du trajet vers lequel elle pointe (perdant ainsi l'énergie associée à ces trajets), ceux-ci étant vus par l'antenne comme des brouilleurs à part entière.

Une telle antenne peut donc être fortement pénalisée en présence de plusieurs trajets de propagation utiles. En effet, la réjection des trajets utiles décorrélés peut se faire au détriment de la réjection des brouilleurs, les performances du récepteur multicapteur peuvent même devenir moins bonnes que celles du récepteur monocapteur lorsque deux trajets de propagation décorrélés temporellement sont très corrélés spatialement.

Afin d'améliorer les performances de cette dernière technique de traitement d'antenne, l'idée est de la coupler à une technique d'égalisation monocapteur. On obtient ainsi les égaliseurs multicapteurs comportant une partie spatiale, composée de différents filtres disposés sur chacune des voies de réception, et une partie temporelle disposée en sortie de la partie spatiale.

On peut citer à cet effet le brevet Européen EP 0867079 B1 ou le brevet US 6.118.832, qui cherchent à réaliser le filtrage spatial des signaux reçus sur le réseau de capteurs, tout en optimisant un critère spatio-temporel permettant de conserver l'ensemble des trajets utiles. Ce filtrage doit donc être suivi par une étape d'égalisation d'un signal monovoie. Le rôle du filtrage spatial est de recombiner les signaux reçus sur les différentes voies, tout en rejetant les interférences éventuelles ainsi que les trajets réfléchis dont le retard est supérieur au retard maximum corrigé par l'égaliseur monovoie qui le suit.

Parmi les techniques d'égalisation monovoie utilisables en sortie du filtrage spatial, la solution optimale au sens du maximum de vraisemblance est basée sur un filtrage adapté au canal de propagation, mis en œuvre après une étape d'estimation de canal, suivi d'un organe de décision basé sur un algorithme de Viterbi. En sortie du filtre adapté au canal, le rapport signal à bruit est maximisé sur le symbole courant (les différents trajets sont recombinés sur le symbole courant, en phase) et l'interférence entre symboles résiduelle est traitée par un algorithme de Viterbi.

Le principal inconvénient de cette technique d'égalisation monovoie provient de ce que l'algorithme de Viterbi requiert une puissance de calcul qui croît en $M^L$, avec $M$ l'ordre de la constellation et $L$ la longueur du canal de propagation estimé (mesuré en temps symboles). Ainsi, ce récepteur peut être envisagé sur des formes d'onde comme le GSM (acronyme anglais pour Global System for Mobile communications, ou groupe spécial mobile), pour lequel $M=2$ et $L=5$, mais pas sur des formes d'ondes plus récentes, pour lesquelles la bande de modulation est plus importante et où les constellations sont d'ordre plus élevées.

Une alternative à l'algorithme de Viterbi, moins coûteuse en termes de puissance de calculs, consiste à mettre en œuvre un égaliseur monovoie en sortie du filtrage spatial. L'égaliseur monovoie peut être n'importe quel type d'égaliseur connu de l'homme du métier, comme par exemple un égaliseur DFE (acronyme anglais pour Decision Feedback Equalizer), BDFE (acronyme anglais pour Block-DFE), un égaliseur FDE (Frequency Domain Equalization), un égaliseur transverse, ou un turbo égaliseur. Ces égaliseurs peuvent être basés sur des critères dits de ZF (acronyme anglais pour Zero-Forcing », MMSE (acronyme anglais pour Miminum Mean Square Error, ou égalisation selon un critère de minimisation de l'erreur quadratique), MLSE (acronyme anglais pour Maximum Likelihood Sequence Estimator, ou égalisation selon un critère de maximum de vraisemblance), ou autres.

Dans le brevet EP 0867079 B1, pour réaliser le filtrage spatial du signal multivoies reçu, un vecteur $w$, composé d'un coefficient par voie, est utilisé lors d'une étape de traitement d'antenne et de recombinaison des voies.définissant un filtre temporel s'appliquant sur la séquence d'apprentissage. Ce vecteur $w$ est calculé, conjointement avec un vecteur $v$ de manière à minimiser l'erreur quadratique moyenne entre le signal de sortie de la partie spatiale, correspondant au signal filtré par $w$ et le signal de sortie de la partie temporelle, correspondant à la séquence d'apprentissage filtrée par $v$. Le vecteur $v$ est un intermédiaire de calcul permettant de calculer le vecteur $w$.

Deux contraintes sont envisagées pour calculer les vecteurs $w$ et $v$. La première contrainte est une contrainte de norme qui permet d'optimiser le filtre spatial lorsque l'égaliseur placé en sortie est un égaliseur basé sur l'algorithme de Viterbi (le filtre spatial calculé optimise le rapport signal à bruit sur interférences (en anglais Signal over Noise plus Interference Ratio, ou SNIR) global associé à tous les trajets), tandis que la deuxième contrainte est une contrainte de pointage qui permet d'optimiser le filtre spatial lorsque l'égaliseur placé en sortie est du type MMSE (le filtre spatial calculé optimise le SNIR associé au trajet principal afin de favoriser le fonctionnement de l'égaliseur placé en sortie).

Le brevet EP 0867079 B1 présente cependant un certain nombre d'inconvénients. Les principaux sont les suivants :

- la mise en œuvre du traitement d'antenne nécessite l'inversion de matrices, opération très couteuse en termes de temps de calculs. Certaines de ces matrices sont calculées à partir de séquences d'apprentissage connues, et peuvent être précalculées en amont, puis stockées en mémoire, diminuant d'autant la puissance de calcul requise. Cependant, la taille de ces matrices est importante et leur stockage peut poser problème lorsque le nombre de matrices à stocker augmente. C'est en particulier le cas dans les applications visant à diminuer la signature de la forme d'onde en utilisant un grand nombre de séquences d'apprentissage différentes.

- les algorithmes décrits nécessitent de prendre une référence temporelle $i_0$, choisie comme correspondant au trajet de plus forte puissance déterminé lors d'une phase amont de synchronisation. Ce critère ne considère donc qu'un seul des trajets, et n'est pas nécessairement le critère de choix optimal.

- les performances liées au filtrage spatial peuvent être améliorés, en modifiant la manière dont les coefficients de ce filtrage sont calculés pour ne pas rejeter les trajets situés dans la fenêtre du filtrage monovoie. De plus, une dimension temporelle supplémentaire peut être apportée au filtrage spatial, afin de lui permettre d'atténuer des multi-trajets situés hors de la fenêtre de l'égaliseur et/ou de mettre en phase des trajets multiples situés dans l'horizon de l'égaliseur, et de corriger des désappairages entre les voies du récepteur.

L'invention vise donc à résoudre tout ou partie des inconvénients précités, et à proposer une implémentation qui soit à la fois performante, et peu couteuse en termes de puissance de calcul et d'espace mémoire requis.

A cet effet, l'invention porte sur un procédé de réception d'un signal et de rejection des interférences dans un récepteur multivoies comme défini par les revendications indépendantes.

Ce procédé comprend les étapes de :

- réception, transposition et discrétisation du signal reçu sur chacune des voies du récepteur, afin d'obtenir un signal multivoies discrétisé,
- synchronisation du signal multivoies discrétisé,
- calcul, à partir du signal multivoies discrétisé et synchronisé, d'une matrice $\hat{R}$ de corrélation du bruit total,
- calcul, à partir de ladite matrice $\hat{R}$ de corrélation du bruit total, d'un vecteur $\boldsymbol{w}$ comprenant des coefficients de pondération amplitude phase d'un filtre multivoies, et
- application, au signal multivoies discrétisé et synchronisé, d'un traitement de filtrage multivoies à partir dudit vecteur $\boldsymbol{w}$, puis d'un traitement d'égalisation monovoie au signal filtré.

Le calcul de la matrice $\hat{R}$ de corrélation du bruit total reçu sur l'ensemble des voies du récepteur peut être réalisé à partir :

- d'une matrice $\hat{R}_{XX}$ d'autocorrélation du signal multivoies discrétisé et synchronisé reçu,
- d'une matrice $\hat{R}_{XD}$ d'intercorrélation entre une séquence d'apprentissage et le signal multivoies discrétisé et synchronisé reçu,
- d'une matrice $\hat{R}_{DD}$ d'autocorrélation de ladite séquence d'apprentissage,

selon la formule :

$$\hat{R} = \hat{R}_{XX} - \hat{R}_{XD}^{H} \hat{R}_{DD}^{-1} \hat{R}_{DX}.$$

Avantageusement, l'inverse de la matrice $\hat{R}_{DD}$ est pré-calculé et stocké dans une mémoire du récepteur multivoies.

Le calcul du vecteur $\boldsymbol{w}$ comprenant des coefficients de pondération amplitude phase à appliquer sur chacune des voies dans la partie filtrage multivoies comprend :

- le calcul de $\boldsymbol{r}_{xd}(i_0)$, $\boldsymbol{r}_{xd}(i_0)$ étant l'espérance mathématique de la corrélation entre une séquence d'apprentissage et le signal multivoies reçu affecté d'un retard $i_0$,
- le calcul de $\hat{\boldsymbol{w}}$ selon la formule $\hat{\boldsymbol{w}} = \hat{R}^{-1} \boldsymbol{r}_{xd}(i_0)$.

Selon un mode de réalisation, le retard $i_0$ est déterminé par rapport à la position du trajet de plus forte puissance. Selon un autre mode de réalisation, il est déterminé par rapport à la position qui maximise le rapport signal à bruit plus interférences en sortie du filtrage multivoies. Cette position est obtenue par la formule :

$$i_0 = ArgMax_i \big\{ SNIR(i) = \hat{\boldsymbol{r}}_{xd}(i)^H \hat{R}^{-1} \hat{\boldsymbol{r}}_{xd}(i) \big\}.$$

Avantageusement, ladite égalisation monovoie est réalisée à partir d'une estimation du canal de propagation monovoie $\boldsymbol{g}$ donnée par la formule $\boldsymbol{g} = \boldsymbol{w}^H \hat{H}$, où $\hat{H}$ est une matrice de canal multicapteurs estimée selon la formule $\hat{H} = \hat{R}_{XD} R_{DD}^{-1}$.

Selon un mode de réalisation du procédé selon l'invention, le filtrage multivoies est un filtrage spatial. Selon un autre mode de réalisation, let filtrage multivoies est un filtrage spatio-temporel. Dans ce cas, le procédé comprend en outre une étape de détermination d'au moins un retard $\tau_j$ associé à un trajet multiple $j$ du signal reçu, et une étape de formation d'un vecteur de signal multivoies spatio-temporel à partir dudit signal discrétisé et synchronisé et dudit signal discrétisé et synchronisé retardé du ou des dits retards $\tau_j$. Les étapes de calcul d'une matrice $\hat{R}$ de corrélation du bruit total, et d'application d'un traitement de filtrage multivoies prennent alors en entrée ledit signal multivoies spatio-temporel en lieu et place de signal multivoies synchronisé et discrétisé.

L'invention porte également sur un récepteur multivoies configuré pour recevoir un signal sur une pluralité de voies et rejeter des interférences. Le récepteur comprend :

- au moins deux chaînes radio, pour la réception, transposition et discrétisation dudit signal reçu sur chacune des voies du récepteur, afin d'obtenir un signal multivoies discrétisé,
- des circuits de calculs configurés pour :

  ◦ synchroniser ledit signal multivoies discrétisé,
  ◦ calculer, à partir du signal multivoies discrétisé et synchronisé, une matrice $\hat{R}$ de corrélation du bruit total,
  ◦ calculer, à partir de ladite matrice $\hat{R}$ de corrélation du bruit total, un vecteur $w$ comprenant des coefficients de pondération amplitude phase d'un filtre multivoies, et
  ◦ appliquer au signal multivoies discrétisé et synchronisé, un traitement de filtrage multivoies à partir dudit vecteur $w$ et d'un traitement d'égalisation monovoie au signal filtré.

### *Description*

L'invention sera mieux comprise et d'autres caractéristiques et avantages apparaîtront mieux à la lecture de la description qui suit, donnée à titre non limitatif, et grâce aux figures annexées parmi lesquelles :

- la figure 1a présente une structure de trame permettant de mettre en œuvre l'invention ;

- la figure 1b présente un schéma fonctionnel classique de récepteur multivoies dans lequel est mis en œuvre un procédé de filtrage multivoies selon un mode de réalisation de l'invention ;

- la figure 2 présente un schéma fonctionnel d'égaliseur antibrouillé multivoies permettant la mise en œuvre de l'invention ;

- la figure 3 représente un exemple de résultat obtenu par corrélation entre un signal reçu et une séquence d'apprentissage ;

- la figure 4 présente un schéma fonctionnel d'égaliseur antibrouillé multivoies selon un autre mode de réalisation de l'invention, dans lequel la partie filtrage spatial comprend une dimension temporelle supplémentaire par rapport à l'état de la technique ;

- la figure 5 est une représentation sous la forme d'un diagramme d'état des étapes d'un mode de réalisation du procédé selon l'invention ;

- la figure 6 est une représentation sous la forme d'un diagramme d'état des étapes d'un mode de réalisation du procédé selon l'invention.

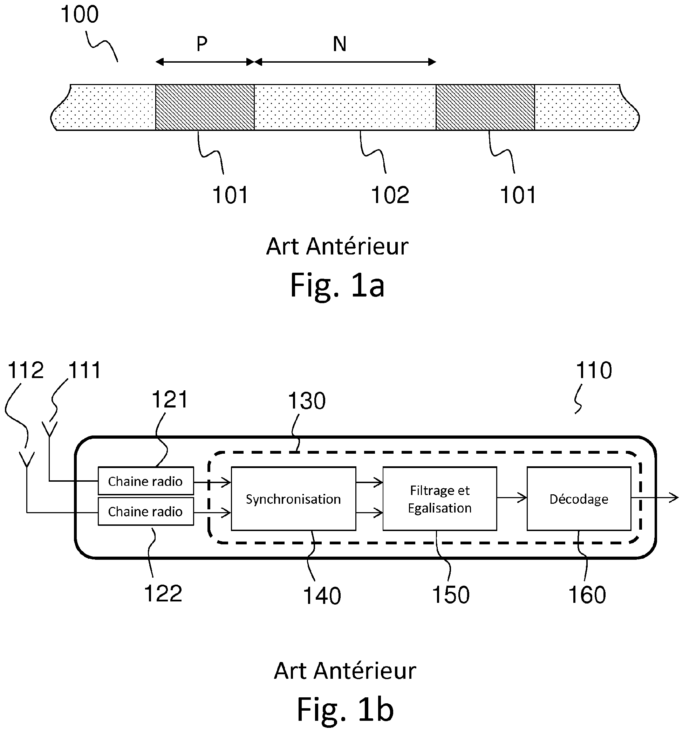

La figure 1a présente la structure de trame 100 d'un signal permettant de mettre en œuvre l'invention. Celle-ci s'applique sur tout type de signal mono-porteuse comprenant des séquences d'apprentissage 101, constituées de symboles de référence connus par l'émetteur et le récepteur, transmises en alternance avec des séquences d'informations 102, constituées de symboles utiles, ou symboles d'information. Cette structure de trame est commune à la plupart des standards de communication monoporteuse et multiporteuses actuels. On citera à titre d'exemple le standard GSM, le standard 3G (3ème génération), le standard LTE (acronyme anglais pour Long Term Evolution, ou 4G), les différents standards DVB (acronyme anglais pour Digital Video Broadcasting), et beaucoup d'autres.

Les séquences d'apprentissage ont pour but de permettre la synchronisation temporelle et fréquentielle du récepteur, ainsi que l'estimation du canal de propagation en vue de sa compensation par le biais d'un égaliseur ou de toute autre technique adaptée. Leurs positions dans la trame sont connues du récepteur.

La longueur des séquences d'apprentissage, et leur répartition au sein du signal transmis, dépend des contraintes de mise en œuvre de la forme d'onde (comme par exemple la longueur des trames, la vitesse maximale de déplacement, le type de canal de propagation, ...). Dans la suite du document, on considèrera que les séquences d'apprentissage sont de tailles identiques valant P symboles, et que les séquences de données sont de tailles identiques valant N symboles. L'invention s'applique de manière identique lorsque les tailles des séquences d'apprentissage et des séquences de données varient, ou lorsque les séquences d'apprentissage ne sont pas toutes identiques.

La figure 1b présente un schéma fonctionnel classique de récepteur multivoies dans lequel est mis en œuvre un procédé d'égalisation multivoies selon un mode de réalisation de l'invention.

Le récepteur 110 comprend au moins deux antennes (ou capteurs) 111 et 112, destinées à recevoir un signal. Chacune des antennes est le point d'entrée de l'une des voies du récepteur. Il comprend également une chaine radio 121 et 122 par voie, dont l'objet est de transformer le signal analogique reçu sur fréquence porteuse en un signal bande de base discrétisé. Pour ceci, la chaîne radio met en œuvre de moyens de conversion de la fréquence porteuse du signal. Un mode de réalisation classique consiste à transposer le signal d'abord en fréquence intermédiaire, puis à le transformer en des signaux discrets équivalents en bande de base par l'intermédiaire d'un oscillateur local, d'un déphaseur et de mélangeurs créant respectivement une première voie I en phase et une deuxième voie Q en quadrature de phase avec le signal d'entrée. Les signaux délivrés par les mélangeurs sont discrétisés par des convertisseurs analogique/numérique, ou CAN. Des moyens de filtrage du signal à diverses étapes de la transposition du signal peuvent également être mis en œuvre afin d'éviter les phénomènes de remontées de spectre liées aux transpositions de fréquence et aux réductions du rythme d'échantillonnage. Le signal en sortie de chaîne radio est un signal numérique bande de base échantillonné à un rythme supérieur au rythme symbole de la modulation (généralement un multiple entier du rythme symbole).

En aval de la chaîne radio, le récepteur comprend des circuits de calcul 130 en charge de l'exécution de tous les algorithmes de traitements du signal nécessaires afin d'assurer la bonne réception du signal. Ces circuits de calcul peuvent se présenter, par exemple, sous la forme d'une machine de calcul reprogrammable, tel un processeur, un DSP (acronyme anglais pour Digital Signal Processor, ou processeur de signal numérique), ou un micro contrôleur, sous la forme d'une machine de calcul dédiée, tel qu'un ensemble de portes logiques comme un FPGA (acronyme anglais pour Field-Programmable Gate Array, ou circuit intégré programmable) ou un ASIC (acronyme anglais pour Application Specific Integrated Circuit, ou circuit intégré à application spécifique), ou sous la forme de tout autre module matériel permettant l'exécution de calculs. Ils disposent, ou sont reliés, d'un espace de stockage permettant de stocker des données, comme par exemple des séquences d'apprentissage ou des matrices durant les divers traitements qu'ils réalisent.

Les circuits de calcul sont en charge de la synchronisation 140 du récepteur. L'objet de la synchronisation est de sélectionner le meilleur instant d'échantillonnage, et de mesurer et compenser les décalages temporels et fréquentiels dus à la propagation du signal. La synchronisation est généralement réalisée en considérant les séquences d'apprentissage. La position temporelle et fréquentielle de synchronisation déterminée est identique pour l'ensemble des voies. Celle-ci peut être déterminée en synchronisant chacune des voies indépendamment puis en choisissant la position offrant les meilleures performances, ou par un procédé plus spécifique de synchronisation multivoies, tel que celui décrit dans le brevet Européen EP 0665665 B1, cette dernière solution offrant de meilleures performances en termes de robustesse face au bruit et aux interférences. Le signal résultant se présente alors sous la forme d'un signal multivoies synchronisé, généralement échantillonné au rythme symbole.

Les circuits de calcul sont également en charge du filtrage et égalisation multivoies anti-brouillée 150 du signal, qui constitue l'objet de l'invention. Cette égalisation multivoies comprend un filtrage multivoies anti-brouillé, suivi d'une égalisation du signal monovoie résultant du filtrage multivoies. Le rôle du filtrage multivoies anti-brouillé consiste à optimiser la réception de l'ensemble des multitrajets associés au signal utile et à supprimer les signaux interférents non désirés en générant des « trous » dans le diagramme de rayonnement des antennes en direction des interférences et des multi-trajets dont l'étalement des retards est en dehors de la fenêtre de l'égaliseur monovoie placé en sortie. La longueur de la fenêtre de l'égaliseur monovoie est un choix d'implémentation, déterminé en fonction d'un compromis entre les probabilités d'occurrence d'un canal de propagation dont l'étalement est supérieur à cette taille, et la complexité nécessaire à son implémentation. L'égalisation monovoie peut être réalisée indifféremment dans le domaine temporel ou dans le domaine fréquentiel.

Enfin, les circuits de calcul sont en charge de l'ensemble des algorithmes de traitement du signal 160 nécessaires pour reconstituer les bits utiles transmis à partir de l'estimée de la suite des symboles émis. Ces algorithmes sont par exemple des algorithmes de décodage canal, de désentrelacement, de déchiffrement, ou autre, dont le choix et les paramètres d'implémentation dépendent du standard de communication utilisé. Suivant le type d'algorithme utilisé, les symboles estimés transmis aux circuits de calcul peuvent être des symboles décidés ou non décidés. Ils peuvent également être associés à une estimation du SNR pour permettre ou non un calcul de rapport de vraisemblance logarithmique (en anglais pour Log Likelihood Ratio, ou LLR).

Dans la suite, les notations suivantes seront utilisées :

- *A* (majuscule) désigne une matrice,

- *a* (gras) désigne un vecteur,

- ^ (chapeau) désigne une quantité estimée,

- $H$ désigne l'opérateur transposé-conjugué,

- $E[a]$ désigne l'espérance mathématique de a.

- $P$ est la longueur des séquences d'apprentissage, en nombre de symboles,

- $N$ est la longueur des séquences d'information, en nombre de symboles,

- $K$ désigne le nombre de voies du récepteur,

- $L$ est la longueur de la fenêtre de l'égaliseur, en nombre de symboles. Cette fenêtre correspond à l'étalement maximum des trajets pouvant être égalisés. Lorsque le canal de propagation comprend des multi-trajets dont l'étalement est supérieur à cette distance $L$, ces trajets sont vus comme des signaux interférents.

- $x_j(n)$ désigne le signal reçu sur la voie $j$ pour le symbole $n$,

- $x(n)$ désigne le vecteur signal multicapteurs reçu pour le symbole $n$, de dimension $K$,

- $d(n)$ désigne le signal émis sur les séquences d'apprentissage,

- $s(n)$ désigne le signal émis sur les séquences d'information,

- $\hat{s}(n)$ désigne le signal estimé sur les séquences d'information,

- $b(n)$ est un vecteur de dimension $K$ désignant le bruit de réception total (bruit de fond plus interférences éventuelles, plus multitrajets utiles éventuels situés en dehors de la fenêtre d'égalisation, c'est-à-dire arrivant avant le premier trajet compris dans la fenêtre d'égalisation ou dont le retard est supérieur à $L$ symboles par rapport à ce premier trajet),

- $h(n)$, pour $n = 0,..., L - 1$, est le vecteur, de dimension $K$, contenant la réponse impulsionnelle du canal de propagation utile multicapteurs associée aux trajets entrant dans la fenêtre d'égalisation,

- $R$ désigne la matrice d'autocorrélation du bruit de réception total,

- $\hat{R}_{DD}$ désigne la matrice d'autocorrélation du signal d'apprentissage,

- $R_{DX}$ désigne la matrice d'intercorrélation entre le signal d'apprentissage et le signal correspondant reçu, et

- $R_{XX}$ désigne la matrice d'autocorrélation du signal reçu.

On notera en particulier :

- $d(n) = [d(n), d(n - 1), ..., d(n - L + 1)]^T$ le vecteur de taille $L$ formé à partir des symboles d'apprentissage, et

- $H = [h(0), h(1),..., h(L-1)]$ la matrice de canal multicapteurs formée à partir des vecteurs $h(i)$ de taille $(K,L)$,

ainsi que les matrices :

$$\hat{R}_{DD} = \frac{1}{P - L + 1} \sum_{n=L-1}^{P-1} d(n)d(n)^H, \qquad (1)$$

$$\hat{R}_{XD} = \frac{1}{P - L + 1} \sum_{n=L-1}^{P-1} x(n)d(n)^H, \qquad (2)$$

$$\hat{R}_{XX} = \frac{1}{P-L+1} \sum_{n=L-1}^{P-1} \boldsymbol{x}(n)\boldsymbol{x}(n)^{H}. \tag{3}$$

L'invention s'applique donc sur un signal multivoies, et fait suite à l'étape de synchronisation 140.

Elle concerne le calcul des coefficients qui seront utilisés pour le filtrage multivoies et l'égalisation du signal reçu, et s'appuie donc en particulier sur les séquences d'apprentissage.

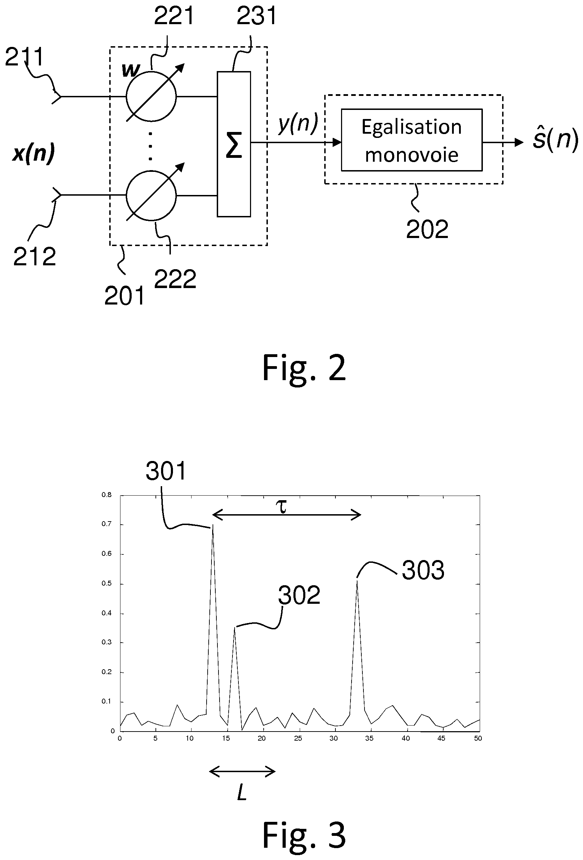

La figure 2 présente un schéma fonctionnel d'égaliseur antibrouillé multivoies permettant la mise en œuvre de l'invention.

Après synchronisation, le vecteur signal reçu sur le réseau de capteurs s'écrit :

$$\boldsymbol{x}(n) = \sum_{i=0}^{L-1} e(n-i)\boldsymbol{h}(i) + \boldsymbol{b}(n) \tag{4}$$

avec e(n) le signal émis, valant $d(n)$ pour les séquences d'apprentissage et $s(n)$ pour les séquences d'information.

En notant $\boldsymbol{e}(n) = [e(n), e(n-1),...,e(n-L+1)]^{T}$ le vecteur de taille $L$ formé à partir des symboles émis par la source utile, alors la relation précédente peut s'écrire $x(n) = He(n) + \boldsymbol{b}(n)$.

L'égaliseur antibrouillé multivoies selon l'invention comprend une partie filtrage multivoies 201 et une partie 202 réalisant une égalisation monovoie. Le signal $x(n)$ est reçu sur chacune des $K$ voies (dans l'exemple deux voies 211 et 212 reçoivent respectivement $x_1(n)$ et $x_2(n)$). La partie filtrage multivoies met en œuvre un filtre à un seul coefficient complexe par voie (221, 222), qui permet de pondérer le signal d'entrée multivoies par un vecteur de pondération amplitude phase $\boldsymbol{w}$. Les signaux issus de la pondération avec chacun des coefficients complexes sont sommés par un sommateur 231. La partie égalisation monovoie 202 met en œuvre un égaliseur chargé de recombiner les signaux issus des différents multi-trajets utiles, à partir d'une estimée $\boldsymbol{g}$ du canal de propagation associé au signal recombiné. Cette estimée $\boldsymbol{g}$ est de longueur $L$ finie.

Si la structure de l'égaliseur multicapteurs antibrouillé est connue, la nouveauté de l'invention réside dans le calcul des coefficients $\boldsymbol{w}$.

Dans le brevet EP 0867079 B1, le calcul du filtre spatial $\boldsymbol{w}$ se fait conjointement avec le calcul d'un filtre temporel $v$, de façon à minimiser un critère d'erreur quadratique moyenne (EQM) sur les séquences d'apprentissage :

$$EQM = E(\|\boldsymbol{w}^{H}.\boldsymbol{x}(n) - \boldsymbol{v}^{H}\boldsymbol{d}(n)\|^{2}). \tag{5}$$

Deux méthodes permettant de calculer ces coefficients, présentant chacune des avantages et des inconvénients, sont décrites dans le brevet.

La première méthode cherche à optimiser l'énergie globale de tous les trajets reçus, en calculant le filtre spatial $\hat{\boldsymbol{w}}$ selon la formule :

$$\hat{\boldsymbol{w}} = \hat{R}_{XX}^{-1}\hat{R}_{DX}^{H}\boldsymbol{v}. \tag{6}$$

Le vecteur $\boldsymbol{v}$ est obtenu en calculant le vecteur propre associé à la valeur propre minimale de la matrice B, avec

$$B = \hat{R}_{DD} - \hat{R}_{DX}\hat{R}_{XX}^{-1}\hat{R}_{DX}^{H}. \tag{7}$$

Le calcul de $v$ nécessite alors la décomposition en valeurs propres de la matrice B, qui est une matrice de taille ($L$ x $L$). Cette décomposition est donc d'autant plus couteuse que le canal à égaliser est de longueur importante, ce qui devient rapidement une limitation majeure pour l'utilisation de ce traitement dans les standards de communication actuels.

La deuxième méthode vise à optimiser l'énergie du trajet de puissance maximum. Dans cette méthode, les trajets secondaires ne sont pas « vus », c'est-à-dire que le filtrage multivoies ne cherche ni à optimiser le gain dans la direction des trajets secondaires, comme dans la première méthode, ni à les rejeter, comme dans le FASR.

Pour ceci, le brevet EP 0867079 B1 propose de calculer le filtre spatial :

$$\widehat{w} = A^{-1} \cdot (r_{xd}(i_0) - \hat{R}_{D'X}^{H} \hat{R}_{D'D'} r_{D'd}(i_0)) \qquad (8)$$

avec

$$A = \hat{R}_{XX} - \hat{R}_{D'X}^{H} \hat{R}_{D'D'}^{-1} \hat{R}_{D'X}, \qquad (9)$$

$i_0$ étant la position associée au pic de synchronisation principal, $\hat{R}_{D'X}$ et $\hat{R}_{D'D'}$ étant les matrices $\hat{R}_{DX}$ et $\hat{R}_{D'D'}$ obtenues en utilisant le vecteur $d'(n)$ au lieu de $d(n)$, $d'(n)$ étant le vecteur $d(n)$ duquel a été retirée la composante $i_0$ et $r_{D'd}(i_0)$ le produit de corrélation entre $d'(n)$ et $d(n - i_0)$.

La résolution des équations précédentes nécessite deux inversions : l'inversion de la matrice A, qui est de taille ($K$ x $K$), $K$ étant le nombre de capteurs du récepteur, et l'inversion de la matrice $\hat{R}_{D'D'}$, de taille (($L$-1) x ($L$-1)).

L'inversion de la matrice A ne pose *a priori* pas de problème, la taille de cette matrice n'étant pas liée à la longueur du canal égalisé mais au nombre de capteurs, ce dernier étant peu susceptible d'atteindre des valeurs telles que l'inversion de cette matrice devienne trop contraignante.

Concernant la matrice $\hat{R}_{D'D'}$, celle-ci est calculée à partir des séquences d'apprentissage. Ces séquences étant connues, l'inverse de cette matrice peut être pré-calculée en amont et stockée en mémoire. Cette matrice dépendant de la valeur de $i_0$, il est nécessaire de précalculer une matrice $\hat{R}_{D'D'}$ inversée pour chacune des $L$ valeurs possibles de $i_0$. L'espace mémoire requis pour le stockage de ces matrices $\hat{R}_{D'D'}$ vaut donc $L$ x ($L$-1) x ($L$-1).

Certaines formes d'onde, en particulier les formes d'ondes militaires, cherchent à garantir une faible probabilité d'interception et de brouillage. Pour cela, elles veillent à réduire au maximum toute sorte de signature radio, signature liée à l'emploi de motifs répétitifs, qui pourraient permettre à un récepteur extérieur de caractériser le type de communication employé, et qui sont autant de points faibles en termes de robustesse contre les brouilleurs, le brouillage des séquences d'apprentissage uniquement entrainant l'impossibilité de recevoir l'ensemble de la transmission.

Dans le cadre de ces formes d'ondes, il est donc habituel de prévoir un grand nombre de séquences d'apprentissages différentes, connues à la fois de l'émetteur et du récepteur, puis de sélectionner les séquences utilisées dans la transmission parmi ces séquences, en faisant dépendre ce choix d'un paramètre connu de l'ensemble des acteurs de la transmission, comme par exemple l'heure de transmission et une clé de cryptage.

La mise en œuvre de la deuxième méthode du brevet EP 0867079 B1 nécessite alors le stockage en mémoire de $M$ matrices $\hat{R}_{D'D'}$ inversées, la taille de ces matrices devenant alors un critère de dimensionnement du récepteur ($M*L*(L$-1)x($L$-1)).

L'objet de l'invention consiste à proposer un nouveau mode de calcul du filtre spatial $w$, permettant de réduire l'espace mémoire occupé, tout en veillant à la complexité d'implémentation liée à l'inversion des matrices, et à améliorer les performances du traitement.

Pour ceci, l'invention propose de considérer les vecteurs colonnes de la matrice $\hat{R}_{XD}$, notés par la suite $r_{xd}(i)$ :

$$\hat{R}_{XD} = [r_{xd}(0), ..., r_{xd}(L - 1)]. \qquad (10)$$

Ces vecteurs constituent des estimées des vecteurs directeurs associés à chaque trajet utile. En notant $i_0$ la position du trajet de plus forte puissance, déterminée lors de la phase de synchronisation comme la position correspondant au maximum du critère de synchronisation, $r_{xd}(i_0)$ constitue une estimée du vecteur directeur associé au trajet principal.

Contrairement aux méthodes antibrouillées selon l'état de l'art mettant en œuvre le Filtre Adapté Spatial à Référence (FASR) défini par le vecteur de pondération amplitude phase des voies :

$$\widehat{w} = \hat{R}_{XX}^{-1} r_{xd}(i_0), \qquad (11)$$

l'invention met en œuvre le filtre adapté spatial à référence bruit seul (FAS-RBS) défini par le vecteur $w$ suivant :

$$\widehat{w} = \hat{R}^{-1} r_{xd}(i_0), \qquad (12)$$

avec R la matrice de corrélation du bruit total, c'est-à-dire du bruit de fond plus interférences éventuelles, et du bruit lié aux multitrajets utiles éventuels situés en dehors de la fenêtre d'égalisation.

En effet, le FASR présente l'inconvénient majeur de traiter les multitrajets utiles décorrélés du trajet $i_0$ comme

des interférences à part entière (ils apparaissent dans la matrice de corrélation $\hat{R}_{XX}$), alors qu'ils pourraient être traités efficacement par l'égaliseur monovoie placé en sortie de la partie spatiale. La conséquence est que le FASR peut même conduire à des performances inférieures à celles d'un traitement d'égalisation monovoie.

Dans le procédé selon l'invention de filtrage adapté spatial à référence bruit seul, les multitrajets utiles décorrélés du trajet $i_0$ n'apparaissent pas dans la matrice de corrélation $\hat{R}$ : par conséquent, le FAS-RBS ne cherche pas à les rejeter, mais cherche à rejeter uniquement les interférences ne pouvant pas être exploitées par l'égaliseur monovoie.

La mise en œuvre du filtrage adapté spatial selon l'invention (FAS-RBS) nécessite l'estimation de la matrice $R$ de corrélation du bruit total, qui peut être obtenue directement à partir des matrices estimées $\hat{R}_{XX}$, $\hat{R}_{XD}$ et $\hat{R}_{DD}$ par la formule :

$$\hat{R} = \hat{R}_{XX} - \hat{R}_{XD}\hat{R}_{DD}^{-1}\hat{R}_{XD}^{H}. \qquad (13)$$

Ces calculs ne nécessitent que l'inversion de la matrice de corrélation du bruit total $R$, qui est de taille ($K$ x $K$), et celle de la matrice $R_{DD}$, qui est de taille (L x L) et peut être calculée en amont et stockée en mémoire.

Concernant $\hat{R}$, sa taille n'est pas fonction de la longueur du canal de propagation étalé, mais du nombre de capteurs. Il est donc peu probable que ce nombre soit élevé, et son inversion ne doit pas poser de problèmes particuliers.

Concernant $\hat{R}_{DD}$, tout comme $\hat{R}_{D'D'}$ précédemment, elle peut être précalculée à partir des séquences d'apprentissage. S'agissant d'une matrice complète, il n'est nécessaire de mémoriser qu'une seule version de cette matrice inversée. Ainsi, l'espace mémoire requis est de taille ($L$ x $L$) pour l'inversion de la matrice $\hat{R}_{DD}$, contre $L$ x ($L$-1) x ($L$-1) pour l'inversion de la matrice $\hat{R}_{D'D'}$ de l'art antérieur. L'espace mémoire requis pour le stockage de cette matrice diminue donc d'un ordre de grandeur proche de $L$, ce qui est particulièrement avantageux quand un grand nombre de ces matrices doivent être mémorisées.

Les équations précédentes permettent de calculer le vecteur $\hat{w}$, qui représente le facteur de pondération complexe à appliquer sur chacune des voies de la partie correspondant au filtrage spatial 201. Le signal $y(n)$ résultant du filtrage spatial des signaux multivoies est donc un signal monovoie valant $y(n) = \hat{w}^H x(n)$. Cette opération de filtrage spatial permet de supprimer les brouilleurs et les multi-trajets utiles situés en dehors de la fenêtre de l'égaliseur (de taille $L$), et d'optimiser le gain dans la direction du trajet principal tout en conservant les différents trajets utiles situés dans la fenêtre de l'égaliseur.

Lorsque le bruit est blanc temporellement, le filtrage spatial ainsi réalisé est adapté, c'est-à-dire qu'il permet de maximiser le rapport signal à bruit sur le symbole $s(n - i_0)$. Cependant, cette opération ne permet pas de supprimer l'interférence inter-symboles liée au canal de propagation sur les symboles $(s(n), s(n - 1), ...,s(n - L + 1)$. C'est la raison pour laquelle cette opération de filtrage doit être suivie d'une étape d'égalisation monovoie du signal $y(n)$ pour obtenir la suite des symboles estimés $\hat{s}(n)$.

L'invention se démarque des méthodes décrites dans le brevet EP 0867079 B1 par les points suivants :

- le premier mode de calcul du filtre adapté spatial $\hat{w}$ décrit dans EP 0867079 B1 est adapté lorsque le filtrage spatial est suivi par une étape d'égalisation monovoie basée sur un égaliseur MLSE. Ce type d'égaliseur est performant lorsque la longueur L de la fenêtre d'égalisation est petite, et que la constellation utilisée a peu d'états. Concrètement, ce type d'égaliseur n'est pas adapté aux standards de communications actuels, pour lesquels elle conduit à de moins bonnes performances et à une puissance de calcul plus élevée. De plus, l'invention requiert l'inversion d'une matrice de taille (K x K), contre la décomposition en valeurs propres d'une matrice (L x L) pour ce mode de calcul de la demande de brevet EP ;

- le second mode de calcul du filtre adapté spatial $\hat{w}$ décrit dans EP 0867079 B1 est adapté lorsque le filtrage spatial est suivi par une étape d'égalisation monovoie basée sur un égaliseur MMSE. Le procédé d'égalisation selon l'invention présente des performances équivalentes à ce mode de calcul, tout en étant plus stable numériquement et en nécessitant moins d'espace de stockage en mémoire (de l'ordre de $L$ x $L$ contre $L$ x ($L$-1) x ($L$-1) pour la demande de brevet EP), ce qui présente un intérêt non négligeable, en particulier lorsqu'un grand nombre de séquences d'apprentissage doit être mémorisé.

Dans le procédé de réception d'un signal multivoies selon l'invention, le couplage entre la partie 201 réalisant le filtrage spatial des signaux et la partie 202 réalisant l'égalisation monovoie peut être réalisée de différentes façons, suivant que l'on souhaite optimiser la puissance de calcul ou minimiser l'interaction entre les deux parties.

Le séquencement des traitements réalisés dans un égaliseur monovoie 202 est le suivant :

- Synchronisation temporelle du signal reçu : le signal d'entrée est échantillonné au rythme échantillon. Cette étape permet de sélectionner le bon instant d'échantillonnage, et de sous-échantillonner le signal pour le ramener au rythme symboles. Avantageusement, cette étape peut également comprendre une synchronisation fréquentielle visant à supprimer un décalage fréquentiel lié au Doppler, aux dérives d'horloges, etc...

• Estimation du canal de propagation monovoie,

• Egalisation proprement dite par tout type d'égaliseur monovoie, comme par exemple d'un égaliseur MLSE pouvant être mis à œuvre par le biais d'un filtrage adapté suivi d'un algorithme de Viterbi, ou d'un égaliseur MMSE, mis en œuvre par un égaliseur transverse, un égaliseur à rétroaction de décision (DFE) linéaire ou en blocs (BDFE), par une égalisation dans le domaine fréquentiel (FDE), etc...

Selon un premier mode de réalisation, la partie 201 réalisant le filtrage multivoies des signaux et la partie 202 réalisant l'égalisation monovoie du récepteur sont totalement indépendantes. En sortie du filtrage spatial, le signal monovoie est échantillonné au même rythme qu'en entrée et l'égaliseur monovoie travaille de la même façon que s'il avait à traiter un signal monovoie directement reçu sur l'antenne. Cette procédure permet de minimiser la reprise de code à effectuer sur l'égaliseur monovoie lors de l'ajout d'un traitement multivoies à un récepteur monovoie, mais n'est pas optimal en termes de puissance de calcul requise.

Selon un deuxième mode de réalisation, le bloc 140 du récepteur, qui réalise la synchronisation multivoie initiale, est configuré pour transmettre au bloc 150 de filtrage multivoies et égalisation monovoie des informations concernant la position de synchronisation optimale et le décalage fréquentiel estimé. Le bloc 150 réalise alors le filtrage spatial du signal multivoie, et est configuré pour décimer le signal monovoie à la fréquence symbole, et éventuellement compenser le décalage fréquentiel. Ainsi, le signal sortant de la partie filtrage spatial 201 est synchronisé, échantillonné au rythme symbole, et éventuellement corrigé d'un décalage fréquentiel estimé. Ce signal est fourni à l'égaliseur monovoie qui n'a alors pas à réaliser l'étape de synchronisation et décimation du signal.

Selon un troisième mode de réalisation, la partie filtrage spatial décime le signal à la fréquence symbole, et compense des décalages de fréquences, de manière identique à ce qui est fait dans le deuxième mode de réalisation. En sortie de la partie filtrage spatial, le signal est synchronisé, échantillonné au rythme symbole et éventuellement corrigé d'un décalage fréquentiel estimé. Ce signal est fourni à l'égaliseur monovoie, ainsi qu'une estimée du canal de propagation monovoie. L'égaliseur monovoie n'effectue alors plus que l'étape d'égalisation proprement dite.

Dans ce troisième mode de réalisation, l'estimée du canal de propagation est fournie à l'égaliseur monovoie, qui l'utilise afin de supprimer l'interférence entre symboles. Cette estimée est le vecteur canal de propagation après filtrage spatial, noté $g$, de taille $(1, L)$, obtenu à partir d'une estimation de la matrice $\hat{H}$ de canal de propagation multicapteurs, de taille $(K,L)$ par la formule suivante :

$$g = w^H \hat{H} \qquad\qquad (14)$$

où $\hat{H}$ est la matrice de canal multicapteurs estimée directement à partir des matrices calculées précédemment :

$$\hat{H} = \hat{R}_{XD} R_{DD}^{-1}. \qquad\qquad (15)$$

Ce mode de réalisation, dans lequel la partie filtrage spatial et la partie égalisation monovoie du récepteur multivoies sont couplées, est particulièrement avantageux en termes de complexité d'implémentation. En effet, le filtrage adapté spatial à référence bruit seul présente alors une complexité réduite par rapport à l'art antérieur, mais permet également de réduire la complexité des traitements opérés en aval lors de l'égalisation monovoie du signal.

L'invention propose également un deuxième axe d'amélioration de l'état de l'art, qui concerne la détermination de la valeur de la position $i_0$, utilisée pour le calcul du vecteur $\hat{w}$ utilisé par le filtre adapté spatial. Une manière de déterminer cette valeur est donnée dans le brevet EP 0867079 B1, et consiste à choisir $i_0$ comme étant la position la position du trajet de plus forte puissance, cette position étant déterminé lors de la phase de synchronisation précédant le calcul des coefficients du filtre spatial.

En présence de multi-trajets, cette position n'est pas nécessairement optimale. En effet, la synchronisation ne prend pas en compte l'existence d'un algorithme d'égalisation positionné plus loin dans la chaine des traitements. Ainsi, la synchronisation vise à sélectionner le trajet le plus fort, en considérant l'ensemble des autres trajets comme des brouilleurs, dans le but de « pointer » le filtre spatial en direction de ce trajet.

L'invention propose de choisir $i_0$ lors de l'étape de calcul du vecteur $w$. Le calcul peut alors être réalisé à partir de la matrice d'autocorrélation du bruit total $\hat{R}$, qui comprend uniquement le bruit blanc Gaussien et l'ensemble des trajets situés en dehors de la fenêtre de l'égaliseur. La position choisie en utilisant cette matrice sera donc celle qui maximisera la rejection de ces brouilleurs, contrairement à l'état de l'art, dans lequel l'ensemble des trajets multiples, qu'ils soient situés dans ou en dehors de la fenêtre de l'égaliseur, sont considérés comme des brouilleurs.

La position $i_0$ correspond donc à la position qui maximise le SNIR en sortie du filtre spatial, et est déterminée selon la formule :

$$i_0 = ArgMax_i\{SNIR(i) = \hat{r}_{xd}(i)^H \hat{R}^{-1} \hat{r}_{xd}(i)\}. \qquad (16)$$

Enfin, l'invention propose un troisième axe d'amélioration par rapport à l'état de l'art, qui consiste à étendre la structure de filtrage spatial proposée en lui apportant une composante temporelle supplémentaire.

La figure 3 représente un exemple de résultat obtenu par corrélation entre un signal reçu et une séquence d'apprentissage. L'axe des abscisses est un axe de temps gradué en temps symboles, tandis que l'axe des ordonnées donne le module de la corrélation.

Dans cet exemple, on observe trois multi-trajets 301, 302 et 303. Le premier trajet 301 est le trajet le plus fort. Le deuxième trajet 302 est un trajet de plus faible puissance, son écart par rapport au premier trajet lui permet d'être pris en compte par un égaliseur de longueur $L$ positionné sur le premier trajet. Le troisième trajet 303 est éloigné d'une distance $\tau$ supérieure à la longueur de la fenêtre de l'égaliseur. En positionnant la synchronisation sur le premier trajet, le troisième sera en dehors de l'horizon de l'égaliseur, et sera considéré comme un brouilleur.

L'ajout d'une dimension temporelle supplémentaire au filtrage d'antenne permet de recombiner ce signal avec les signaux utiles, et donc de le prendre en compte, améliorant ainsi le rapport signal à bruit, réduisant les interférences inter symboles, et donc améliorant ainsi les performances du récepteur.

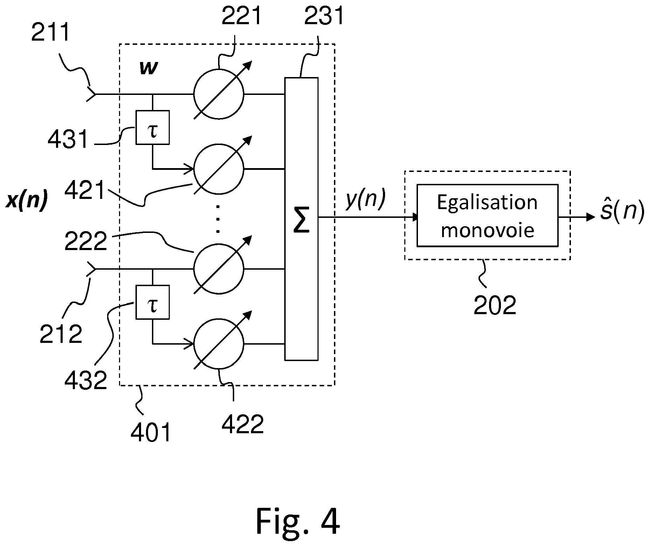

La figure 4 présente un schéma fonctionnel d'égaliseur antibrouillé multivoies selon un autre mode de réalisation de l'invention, dans lequel la partie filtrage multivoies comprend une dimension temporelle supplémentaire par rapport à l'état de la technique. On parle alors de filtrage spatio-temporel.

Dans cet exemple, l'architecture de l'égaliseur antibrouillé multivoies est telle qu'il n'est en mesure de traiter qu'un seul trajet supplémentaire. L'homme du métier souhaitant étendre cette structure à plus d'un trajet pourrait très facilement y parvenir à partir des enseignements donnés ci-après.

L'égaliseur multivoies tel que défini par l'invention est basé sur la structure de filtrage multivoies de la figure 2, dont la partie 401 dédiée au filtrage spatial est modifiée par l'ajout, pour chacune des voies d'entrée 211 et 212, d'une branche supplémentaire comprenant une ligne à retard 431 et 432, et un filtre à un coefficient complexe 421 et 422. La prise en compte de trajets supplémentaires peut être réalisée en ajoutant une branche supplémentaire sur chacune des voies d'entrées par trajet supplémentaire.

Les lignes à retard 431 et 432 introduisent un retard $\tau$ correspondant à l'écart entre la position de synchronisation et le trajet devant être pris en compte. Dans l'exemple présenté en figure 3, ce retard correspond à l'écart entre le trajet 301 et le trajet 303. Le trajet supplémentaire pris en compte pourrait également être le trajet 302, afin de le remettre en phase avec le trajet principal en amont de l'égaliseur. En pratique, les trajets sur lesquels l'adaptation est réalisée sont choisis lors de l'étape initiale de synchronisation multivoies.

Le filtrage spatio-temporel présenté conserve la capacité de réjection des interférences du filtrage spatial présentée en figure 2 et son optimalité pour des canaux non étalés (propagation en espace libre et fading plat), et l'améliore lorsque le canal de propagation utile est sélectif en fréquence, en remettant en phase les trajets secondaires sélectionnés entre les différentes voies. Cette remise en phase peut également s'appliquer aux trajets multiples sortant de l'horizon de l'égaliseur, ce qui présente un intérêt dans le cas de canaux de propagation dont l'étalement temporel peut-être supérieur à l'horizon de l'égaliseur. Un cas d'application intéressant concerne les aéronefs, pour lesquels l'utilisation d'un égaliseur est souhaitable afin de prendre en compte les multi-trajets liés aux réflexions sur la carlingue ou les bâtiments avoisinants lorsque l'aéronef est au sol (retards typiquement inférieurs à 5 voire 10 $\mu$s), mais peut s'avérer très couteuse lorsqu'il s'agit de prendre en compte des retards liés à la réflexion sol lorsque l'avion est en altitude (retards pouvant être supérieurs à 20 $\mu$s pour deux avions à altitudes élevées). Le filtrage spatio-temporel proposé par l'invention apporte une solution permettant de prendre en compte ces trajets hors horizon de l'égaliseur dans des récepteurs dont l'égaliseur monovoie n'est pas dimensionné pour traiter de tels trajets.

La structure de filtrage spatio-temporel décrite est compatible avec les différents types de forme d'onde comportant des séquences de référence.

Les coefficients w de la partie spatio-fréquentielle de ce mode de réalisation peuvent être calculés de manière identique à ceux présentés précédemment, en remplaçant les vecteurs $x(n)$ et $w$ par leurs équivalents spatio-temporels :

$$\tilde{x}(n) = \begin{bmatrix} x(n) \\ x(n+\tau) \end{bmatrix} = [x_1(n), x_2(n), x_1(n+\tau), x_2(n+\tau)]^T \qquad (17)$$

et

$$\widetilde{\boldsymbol{w}} = \begin{bmatrix} \boldsymbol{w}_1 \\ \boldsymbol{w}_2 \end{bmatrix}, \qquad\qquad (18)$$

avec $\boldsymbol{w}_1$ les coefficients déterminés à partir du trajet non retardé, et $\boldsymbol{w}_2$ les coefficients déterminés à partir du trajet supplémentaire retardé de $\tau$.

Le signal de sortie du filtre spatio-temporel, après sommation, s'écrit :

$$y(n) = \widetilde{\boldsymbol{w}}^H \widetilde{\boldsymbol{x}}(n) = \boldsymbol{w}_1{}^H \boldsymbol{x}(n) + \boldsymbol{w}_2{}^H \boldsymbol{x}(n + \tau) \qquad\qquad (19)$$

et est fourni à l'égaliseur monovoie adapté à la forme d'onde considérée.

Un autre avantage apporté par la structure de filtrage spatio-temporel telle que décrite dans l'invention réside dans la capacité de correction des défauts de désappairage entre les voies de réception.

En effet, les chaînes de réception du récepteur sont généralement imparfaites, c'est-à-dire que toutes les voies de réception ne sont pas exactement identiques. Ces imperfections sont dues principalement aux variations propres aux composants analogiques. Les traitements de filtrage d'antenne prennent pour hypothèse que les signaux reçus sur chacun des capteurs sont traités de manière identique par les chaînes radio. Les imperfections des composants viennent alors créer des variations dans la bande du signal qui dégradent les performances de ces traitements.

Lorsque le filtrage d'antenne présente uniquement une composante spatiale (voir figure 2), sa réponse en fréquence est plate dans la bande du signal. Le filtrage spatial ne peut donc compenser les variations fréquentielles du signal liées aux désappairages. A l'inverse, l'introduction d'une notion temporelle supplémentaire à ce traitement de filtrage d'antenne (figure 4) permet au filtre d'apporter une réponse en fréquence, et donc de compenser les variations liées aux désappairages.

L'invention porte donc sur un procédé d'égalisation multivoies dans un récepteur, l'égalisation comportant une partie de filtrage multivoies spatial ou spatio-temporel, couplée à une partie d'égalisation monovoie, ainsi que dans le récepteur configuré pour mettre en œuvre ce procédé.

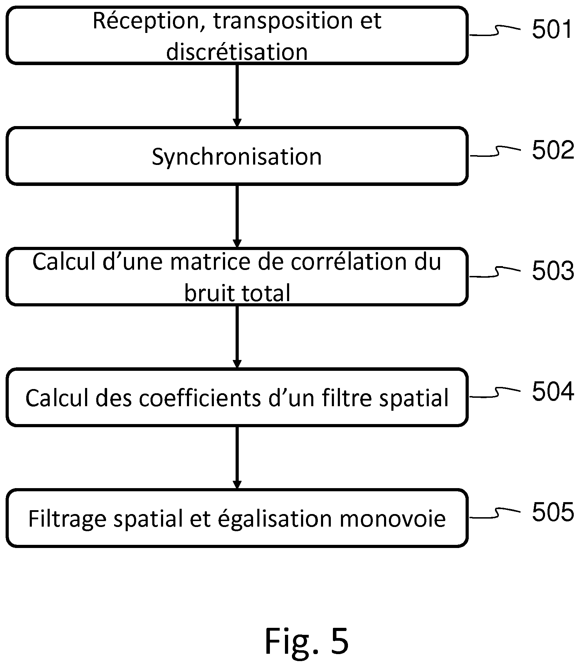

La figure 5 est une représentation sous la forme d'un diagramme d'état des étapes d'un mode de réalisation du procédé selon l'invention, lorsque la structure de filtrage multivoies envisagée est celle représentée en figure 2.

La première étape 501 du procédé consiste en la réception du signal, le signal comprenant des séquences d'apprentissage et des séquences de données, sur une pluralité de capteurs, ou antennes. Elle comprend également l'ensemble des traitements aboutissant à la numérisation du signal, à savoir en particulier la transposition du signal en bande de base et les filtrages associés et la conversion analogique numérique.

La deuxième étape 502 du procédé consiste en la synchronisation temporelle et fréquentielle du signal multivoies reçu, cette étape pouvant avantageusement être réalisée au moyen d'un algorithme de synchronisation multivoies. L'objet de la synchronisation est de trouver l'instant d'échantillonnage permettant d'optimiser la réception du signal, et de déterminer la position dans le signal reçu des séquences d'apprentissage et des séquences de données. La synchronisation peut également comprendre une synchronisation fréquentielle des signaux, visant à compenser un décalage entre les horloges des équipements d'émission et de réception.

La troisième étape 503 du procédé consiste à calculer, à partir des séquences d'apprentissage du signal reçu sur l'ensemble des voies du récepteur, une matrice $\hat{R}$ de corrélation du bruit total reçu, le calcul de cette matrice pouvant avantageusement se faire à partir de la formule :

$$\hat{R} = \hat{R}_{XX} - \hat{R}_{XD} \hat{R}_{DD}{}^{-1} \hat{R}_{XD}{}^{H}. \qquad\qquad (20)$$

En particulier, ce calcul nécessite l'inversion d'une matrice $\hat{R}_{DD}$ d'autocorrélation de la séquence d'apprentissage sur laquelle est faite l'estimée des coefficients de l'égaliseur spatio-temporel. Afin de limiter la charge de calcul, cette matrice inverse peut avantageusement être stockée dans une mémoire du récepteur multivoies selon l'invention.

La quatrième étape 504 du procédé consiste à calculer, à partir de la matrice $\hat{R}$ et d'une valeur $\boldsymbol{r}_{xd}(i_0)$, le vecteur $\boldsymbol{w}$ contenant les coefficients complexes devant être appliqués par le récepteur lors de l'étape de filtrage multivoies. Dans ce cas, le filtrage multivoies est un filtrage spatial. La valeur $\boldsymbol{r}_{xd}(i_0)$ est l'espérance mathématique de la corrélation entre une séquence d'apprentissage et le signal multivoies reçu affecté d'un retard $i_0$. Ce retard $i_0$ peut être sélectionné comme étant le retard entre la position de synchronisation et la position du signal de plus forte puissance, ou bien la position maximisant le SINR en sortie du traitement spatial.

La cinquième étape 505 du procédé consiste à appliquer le filtrage spatial multivoies calculé au signal reçu, pour obtenir un signal monovoie, puis à égaliser ce signal afin de supprimer l'interférence inter symboles résiduelle.

A l'issue du filtrage spatial, le signal est un signal monovoie s'écrivant $y(n) = \hat{\boldsymbol{w}}(n)^H \boldsymbol{x}(n)$, et dont les interférences et trajets multiples situés hors de la fenêtre de l'égaliseur monovoie ont été atténués. L'égalisation monovoie qui suit le filtrage a pour objet d'exploiter l'ensemble des trajets multiples résiduels contenus dans la fenêtre d'égalisation pour supprimer les interférences entre symboles.

Le procédé selon l'invention permet donc de calculer les coefficients des vecteurs devant être utilisés par la partie filtrage spatial et par la partie d'égalisation monovoie d'un égaliseur spatio-temporel afin de lutter contre les interférences.

Les étapes 501 à 504 du procédé sont réalisées à partir des séquences d'apprentissage reçues, ces séquences étant alors connues du récepteur. Les calculs peuvent être réalisés pour chaque séquence d'apprentissage. Le traitement est alors adapté au suivi des variations rapides du canal de propagation. Ils peuvent également réalisés pour chaque séquence d'apprentissage, et combinés entre eux, de manière à lisser les erreurs de calcul liées au bruit.

L'étape 505 s'applique aux séquences de données utiles. Les symboles utiles filtrés spatialement et égalisés qui en résultent peuvent ensuite être traités par les algorithmes de traitements du signal en fonction du standard de communication utilisé, de manière à reconstituer les bits utiles transmis.

Selon un mode de réalisation, le bloc de filtrage multivoies selon l'invention comprend en outre une dimension temporelle sur chacune des voies de réception : le filtrage multivoies des signaux d'entrée est réalisé par une structure spatio-temporelle.

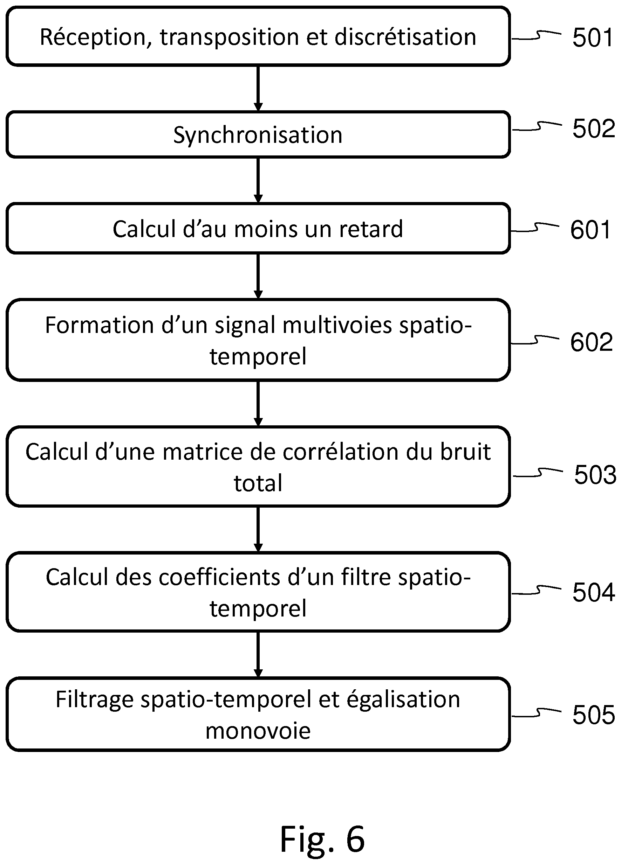

La figure 6 est une représentation sous la forme d'un diagramme d'état des étapes d'un mode de réalisation du procédé selon l'invention, lorsque la structure du bloc de filtrage multivoies envisagé est celle représentée en figure 4, pour laquelle le filtrage des signaux d'entrée est réalisé par une structure spatio-temporelle.

Ainsi, le procédé comprend, en plus des étapes 501 et 502 de réception, transposition et discrétisation du signal et de synchronisation multivoies, une étape 601 de détermination d'au moins un retard ($\tau_1, \tau_2, ..., \tau_N$) entre la position de synchronisation et un ou des trajets du signal reçu. Ce ou ces retards sont avantageusement estimés conjointement à l'étape 502 de synchronisation à partir de la fonction de corrélation entre le signal reçu et les séquences d'apprentissage.

Une étape 602 consiste à retarder chacune des voies du récepteur du ou des retards calculés et à former un vecteur signal multivoies à partir du signal multivoies discrétisé et synchronisé reçu *x(n)*, et des versions retardées de ce même signal :

$$\tilde{x}(n) = \begin{bmatrix} x(n) \\ x(n + \tau_1) \\ ... \\ x(n + \tau_N) \end{bmatrix}. \tag{21}$$

Les étapes suivantes du procédé sont identiques à celles du procédé de la figure 5, si ce n'est qu'elles utilisent le signal $\tilde{x}(n)$ au lieu de *x(n)*.

Ainsi, l'étape 503 de calcul de la matrice de corrélation du bruit total $\hat{R}$ est faite à partir du signal $\tilde{x}(n)$. Cette étape comprend le calcul des matrices $\hat{R}_{XX}$ et $\hat{R}_{XD}$ formées à partir du signal spatio-temporel $\tilde{x}(n)$.

Le calcul 504 du vecteur *w* est réalisé à partir de $\hat{R}$, *w* constituant le filtre spatio-temporel devant être appliqué au signal multivoies $\tilde{x}(n)$.

Enfin, le procédé comprend l'étape 505 de filtrage multivoies à partir du vecteur *w,* mais cette étape est appliquée au signal $\tilde{x}(n)$. Il s'agit alors d'un filtrage spatio-temporel, le signal monovoie résultant devant ensuite être traité par un égaliseur monovoie.

## Revendications

1. Procédé de réception d'un signal et de rejection des interférences dans un récepteur multivoies (110), ledit procédé comprenant les étapes de :

   • réception, transposition et discrétisation (501) dudit signal reçu sur chacune des voies du récepteur (111, 112), afin d'obtenir un signal multivoies discrétisé,
   • synchronisation (502, 140) du signal multivoies discrétisé,

   et **caractérisé en ce qu'**il comprend également les étapes de :

   • calcul (503), à partir du signal multivoies discrétisé et synchronisé, d'une matrice $\hat{R}$ de corrélation du bruit total,
   • calcul d'une matrice $\hat{R}_{XD}$ d'intercorrélation entre une séquence d'apprentissage et le signal multivoies discrétisé et synchronisé reçu,

• calcul, à partir de la matrice $\hat{R}_{XD}$, d'une estimée du vecteur directeur associé à un trajet,
• calcul (504), à partir de ladite matrice $\hat{R}$ de corrélation du bruit total et de l'estimée du vecteur directeur associé à un trajet, d'un vecteur $\boldsymbol{w}$ comprenant des coefficients de pondération amplitude phase (221, 222) d'un filtre multivoies, et
• application (505), au signal multivoies discrétisé et synchronisé, d'un traitement de filtrage multivoies (201) à partir dudit vecteur $\boldsymbol{w}$, puis d'un traitement d'égalisation monovoie (202) au signal filtré.

2. Procédé de réception d'un signal et de réjection des interférences selon la revendication 1, dans lequel le calcul de la matrice $\hat{R}$ de corrélation du bruit total reçu sur l'ensemble des voies du récepteur est réalisé à partir :

• d'une matrice $\hat{R}_{XX}$ d'autocorrélation du signal multivoies discrétisé et synchronisé reçu,
• d'une matrice $\hat{R}_{DD}$ d'autocorrélation de ladite séquence d'apprentissage,
selon la formule :

$$\hat{R} = \hat{R}_{XX} - \hat{R}_{XD}{}^{H} \hat{R}_{DD}{}^{-1} \hat{R}_{DX}.$$

3. Procédé de réception d'un signal et de réjection des interférences selon la revendication 2, dans lequel l'inverse de la matrice $\hat{R}_{DD}$ est pré-calculé et stocké dans une mémoire du récepteur multivoies.

4. Procédé de réception d'un signal et de réjection des interférences selon l'une des revendications précédentes, dans lequel le calcul du vecteur $\boldsymbol{w}$ comprenant des coefficients de pondération amplitude phase à appliquer sur chacune des voies dans la partie filtrage multivoies (201) comprend :

• le calcul de $\boldsymbol{r}_{xd}(i_0)$, $\boldsymbol{r}_{xd}(i_0)$ étant l'espérance mathématique de la corrélation entre une séquence d'apprentissage et le signal multivoies reçu affecté d'un retard $i_0$,
• le calcul de $\hat{\boldsymbol{w}}$ selon la formule $\hat{\boldsymbol{w}} = \hat{R}^{-1} \boldsymbol{r}_{xd}(i_0)$.

5. Procédé de réception d'un signal et de réjection des interférences selon la revendication 4, dans lequel le retard $i_0$ est déterminé par rapport à la position du trajet de plus forte puissance.

6. Procédé de réception d'un signal et de réjection des interférences selon la revendication 4, dans lequel le retard $i_0$ est déterminé par rapport à la position qui maximise le rapport signal à bruit plus interférences en sortie du filtrage multivoies (201).

7. Procédé de réception d'un signal et de réjection des interférences selon la revendication 6, dans lequel la position qui maximise le rapport signal à bruit plus interférences est obtenue par la formule :

$$i_0 = ArgMax_i\{ SNIR(i) = \hat{\boldsymbol{r}}_{xd}(i)^{H}\hat{R}^{-1}\hat{\boldsymbol{r}}_{xd}(i)\}.$$

8. Procédé de réception d'un signal et de réjection des interférences selon l'une des revendications précédentes, dans lequel ladite égalisation monovoie est réalisée à partir d'une estimation du canal de propagation monovoie $\boldsymbol{g}$ donnée par la formule $\boldsymbol{g} = \boldsymbol{w}^{H}\hat{H}$, où $H$ est une matrice de canal multicapteurs estimée selon la formule $\hat{H} = \hat{R}_{XD}R_{DD}{}^{-1}$.

9. Procédé de réception d'un signal et de réjection des interférences selon l'une des revendications précédentes 1 à 8, dans lequel ledit filtrage multivoies est un filtrage spatial.

10. Procédé de réception d'un signal et de réjection des interférences selon l'une des revendications précédentes 1 à 8, dans lequel ledit filtrage multivoies est un filtrage spatio-temporel, le procédé comprenant en outre une étape (601) de détermination d'au moins un retard $\tau_j$ associé à un trajet multiple $j$ du signal reçu, et une étape (602) de formation d'un vecteur de signal multivoies spatio-temporel à partir dudit signal discrétisé et synchronisé et dudit signal discrétisé et synchronisé retardé du ou des dits retards $\tau_j$, les étapes (503) de calcul d'une matrice $\hat{R}$ de corrélation du bruit total, et (505) d'application d'un traitement de filtrage multivoies prenant comme signal multivoies synchronisé et discrétisé ledit signal multivoies spatio-temporel.

11. Récepteur multivoies configuré pour recevoir un signal sur une pluralité de voies et rejeter des interférences, comprenant :

• au moins deux chaînes radio (121, 122), pour la réception, transposition et discrétisation dudit signal reçu sur chacune des voies du récepteur (111, 112), afin d'obtenir un signal multivoies discrétisé, et
• des circuits de calculs (130) configurés pour synchroniser (140) ledit signal multivoies discrétisé,

ledit récepteur étant **caractérisé en ce que** les circuits de calculs (130) sont en outre configurés pour :

• calculer, à partir du signal multivoies discrétisé et synchronisé, une matrice $\hat{R}$ de corrélation du bruit total,
• calculer une matrice $\hat{R}_{XD}$ d'intercorrélation entre une séquence d'apprentissage et le signal multivoies discrétisé et synchronisé reçu,
• calculer, à partir de la matrice $\hat{R}_{XD}$, une estimée du vecteur directeur associé à un trajet,
• calculer, à partir de ladite matrice R de corrélation du bruit total et de l'estimée du vecteur directeur associé à un trajet, un vecteur w comprenant des coefficients de pondération amplitude phase (221, 222) d'un filtre multivoies, et
• appliquer au signal multivoies discrétisé et synchronisé, un traitement de filtrage multivoies (201) à partir dudit vecteur w et d'un traitement d'égalisation monovoie (202) au signal filtré.

## Patentansprüche

1. Verfahren zum Empfangen eines Signals und zum Unterdrücken von Interferenzen in einem Mehrwegempfänger (110), wobei das Verfahren die folgenden Schritte beinhaltet:

• Empfangen, Transponieren und Diskretisieren (501) des auf jedem der Wege des Empfängers (111, 112) empfangenen Signals, um ein diskretisiertes Mehrwegsignal zu erhalten,
• Synchronisieren (502, 140) des diskretisierten Mehrwegsignals,

und **dadurch gekennzeichnet, dass** es auch die folgenden Schritte beinhaltet:

• Berechnen (503), auf der Basis des diskretisierten und synchronisierten Mehrwegsignals, einer Korrelationsmatrix $\hat{R}$ des Gesamtrauschens,
• Berechnen einer Interkorrelationsmatrix $\hat{R}_{XD}$ zwischen einer Lernsequenz und dem empfangenen diskretisierten und synchronisierten Mehrwegsignal,
• Berechnen, auf der Basis der Matrix $\hat{R}_{XD}$, einer Schätzung des mit einem Pfad assoziierten Richtungsvektors,
• Berechnen (504), auf der Basis der Korrelationsmatrix $\hat{R}$ des Gesamtrauschens und der Schätzung des mit einem Pfad assoziierten Richtungsvektors, eines Vektors **w**, der Amplituden-Phasen-Gewichtungskoeffizienten (221, 222) eines Mehrwegfilters umfasst, und
• Anwenden (505), auf das diskretisierte und synchronisierte Mehrwegsignal, einer Mehrwegfilterungsbehandlung (201) auf der Basis des Vektors **w**, dann einer Einwegentzerrungsbehandlung (202) auf das gefilterte Signal.

2. Verfahren zum Empfangen eines Signals und zum Unterdrücken von Interferenzen nach Anspruch 1, wobei die Berechnung der Korrelationsmatrix $\hat{R}$ des empfangenen Gesamtrauschens auf allen Wegen des Empfängers realisiert wird auf der Basis:

• einer Autokorrelationsmatrix $\hat{R}_{XX}$ des empfangenen diskretisierten und synchronisierten Mehrwegsignals,
• einer Autokorrelationsmatrix $\hat{R}_{DD}$ der Lernsequenz,
gemäß der Formel:

$$\hat{R} = \hat{R}_{XX} - \hat{R}_{XD}{}^{H}\,\hat{R}_{DD}{}^{-1}\,\hat{R}_{DX}.$$

3. Verfahren zum Empfangen eines Signals und zum Unterdrücken von Interferenzen nach Anspruch 2, wobei die Umkehr der Matrix $\hat{R}_{DD}$ vorberechnet und in einem Speicher des Mehrwegempfängers gespeichert wird.

4. Verfahren zum Empfangen eines Signals und zum Unterdrücken von Interferenzen nach einem der vorherigen Ansprüche, wobei die Berechnung des Vektors w mit auf jeden der Wege im Mehrwegfilterungsteil (201) anzuwendenden Amplituden-Phasen-Gewichtungskoeffizienten umfasst, Folgendes beinhaltet:

• Berechnen von $r_{xd}(i_0)$, wobei $r_{xd}(i_0)$ die mathematische Erwartung der Korrelation zwischen einer Lernsequenz und dem durch eine Verzögerung $i_0$ beeinflussten empfangenen Mehrwegsignal ist,
• Berechnen von $\hat{w}$ gemäß der Formel $\hat{w} = \hat{R}^{-1} r_{xd}(i_0)$.

5. Verfahren zum Empfangen eines Signals und zum Unterdrücken von Interferenzen nach Anspruch 4, wobei die Verzögerung $i_0$ in Bezug auf die Position des Pfades mit der höchsten Leistung bestimmt wird.

6. Verfahren zum Empfangen eines Signals und zum Unterdrücken von Interferenzen nach Anspruch 4, wobei die Verzögerung $i_0$ in Bezug auf die Position bestimmt wird, die das Signal-Rausch-plus-Interferenz-Verhältnis am Ausgang der Mehrwegfilterung (201) maximiert.

7. Verfahren zum Empfangen eines Signals und zum Unterdrücken von Interferenzen nach Anspruch 6, wobei die Position, die das Signal-Rausch-plus-Interferenz-Verhältnis maximiert, mit der folgenden Formel erhalten wird:

$$i_0 = ArgMax_i\{ SNIR(i) = \hat{r}_{xd}(i)^H \hat{R}^{-1} \hat{r}_{xd}(i)\}.$$

8. Verfahren zum Empfangen eines Signals und zum Unterdrücken von Interferenzen nach einem der vorherigen Ansprüche, wobei die Einwegentzerrung auf der Basis einer Schätzung des Einwegausbreitungskanals $g$ realisiert wird, gegeben durch die Formel $g = \omega^H \hat{H}$, wo $\hat{H}$ eine Mehrsensor-Kanalmatrix ist, die gemäß der Formel $\hat{H} = \hat{R}_{XD} R_{DD}^{-1}$ geschätzt wird.

9. Verfahren zum Empfangen eines Signals und zum Unterdrücken von Interferenzen nach einem der vorherigen Ansprüche 1 bis 8, wobei die Mehrwegfilterung eine räumliche Filterung ist.

10. Verfahren zum Empfangen eines Signals und zum Unterdrücken von Interferenzen nach einem der vorherigen Ansprüche 1 bis 8, wobei die Mehrwegfilterung eine räumlich-zeitliche Filterung ist, wobei das Verfahren ferner einen Schritt (601) des Bestimmens mindestens einer mit einem Multipfad $j$ des empfangenen Signals assoziierten Verzögerung $\tau_j$ und einen Schritt (602) des Bildens eines räumlich-zeitlichen Mehrwegsignalvektors auf der Basis des diskretisierten und synchronisierten Signals und des um die eine oder mehreren Verzögerungen $\tau_j$ verzögerten diskretisierten und synchronisierten Signals beinhaltet, wobei die Schritte (503) des Berechnens einer Korrelations-matrix $\hat{R}$ des Gesamtrauschens und (505) des Anwendens einer Mehrwegfilterungsbehandlung, die als synchronisiertes und diskretisiertes Mehrwegsignal das räumlich-zeitliche Mehrwegsignal nimmt.

11. Mehrwegempfänger, konfiguriert zum Empfangen eines Signals auf einer Vielzahl von Wegen und zum Unterdrücken von Interferenzen, der Folgendes umfasst:

• mindestens zwei Funkkanäle (121, 122) zum Empfangen, Transponieren und Diskretisieren des empfangenen Signals auf jedem der Wege des Empfängers (111, 112), um ein diskretisiertes Mehrwegsignal zu erhalten, und
• Rechenschaltungen (130), konfiguriert zum Synchronisieren (140) des diskretisierten Mehrwegsignals,

wobei der Empfänger **dadurch gekennzeichnet ist, dass** die Rechenschaltungen (130) ferner konfiguriert sind zum:

• Berechnen, auf der Basis des diskretisierten und synchronisierten Mehrwegsignals, einer Korrelationsmatrix $\hat{R}$ des Gesamtrauschens,
• Berechnen einer Interkorrelationsmatrix $\hat{R}_{XD}$ zwischen einer Lernsequenz und dem empfangenen diskretisierten und synchronisierten Mehrkanalsignal,
• Berechnen, auf der Basis der Matrix $\hat{R}_{XD}$, einer Schätzung des mit einem Pfad assoziierten Richtungsvektors,
• Berechnen, auf der Basis der Korrelationsmatrix $\hat{R}$ des Gesamtrauschens und der Schätzung des mit einem Pfad assoziierten Richtungsvektors, eines Vektors w, der Amplituden-Phasen-Gewichtungskoeffizienten (221, 222) eines Mehrwegfilters umfasst, und
• Anwenden, auf ein diskretisierten und synchronisierten Mehrwegsignals, einer Mehrwegfilterungsbehandlung (201) auf der Basis des Vektors $w$ und einer Einwegentzerrungsbehandlung (202) auf das gefilterte Signal.

**Claims**

1. Method for receiving a signal and for rejecting interferences in a multichannel receiver (110), said method comprising the steps of:

- reception, transposition and discretization (501) of said signal received on each of the channels of the receiver (111, 112), so as to obtain a discretized multichannel signal,
- synchronization (502, 140) of the discretized multichannel signal,

and **characterized in that** it also comprises the steps of:

- computation (503), on the basis of the discretized and synchronized multichannel signal, of a correlation matrix $\hat{R}$ of the total noise,
- computation of an intercorrelation matrix $\hat{R}_{XD}$ between a training sequence and the discretized and synchronized multichannel signal,
- computation, on the basis of a matrix $\hat{R}_{XD}$, of an estimate of the directing vector associated with a path,
- calculation (504), on the basis of said matrix $\hat{R}$ of correlation of the total noise and of the estimate of the directing vector associated with a path, of a vector $\boldsymbol{w}$ comprising amplitude phase weighting coefficients (221, 222) of a multichannel filter, and
- application (505), to the discretized and synchronized multichannel signal, of a multichannel filtering processing (201) on the basis of the said vector w, and then of a single-channel equalization processing (202) to the filtered signal.

2. Method for receiving a signal and for rejecting interferences according to Claim 1, wherein the computation of the correlation matrix $\hat{R}$ of the total noise received on all the channels of the receiver is carried out on the basis:

- of an autocorrelation matrix $\hat{R}_{XX}$ of the discretized and synchronized multichannel signal received,
- an autocorrelation matrix $\hat{R}_{DD}$ of said training sequence

according to the formula:

$$\hat{R} = \hat{R}_{XX} - \hat{R}_{XD}{}^{H} \hat{R}_{DD}{}^{-1} \hat{R}_{DX}.$$

3. Method for receiving a signal and for rejecting interferences according to Claim 2, wherein the inverse of the $\hat{R}_{DD}$ matrix is precomputed and stored in a memory of the multichannel receiver.

4. Method for receiving a signal and for rejecting interferences according to one of the preceding claims, wherein the computation of the vector $\boldsymbol{w}$ comprising amplitude phase weighting coefficients to be applied to each of the channels in the multichannel filtering part (201) comprises:

- the computation of $\boldsymbol{r}_{xd}(i_0)$, $\boldsymbol{r}_{xd}(i_0)$ being the mathematical expectation of the correlation between a training sequence and the multichannel signal received affected with a delay $i_0$,
- the computation of $\hat{w}$ according to the formula $\hat{w} = \hat{R}^{-1} \boldsymbol{r}_{xd}(i_0)$.

5. Method for receiving a signal and for rejecting interferences according to Claim 4, wherein the delay $i_0$ is determined with respect to the position of the path of strongest power.

6. Method for receiving a signal and for rejecting interferences according to Claim 4, wherein the delay $i_0$ is determined with respect to the position which maximizes the signal-to-noise plus interferences ratio at the output of the multichannel filtering (201).

7. Method for receiving a signal and for rejecting interference according to Claim 6, wherein the position which maximizes the signal-to-noise plus interferences ratio is obtained through the formula:

$$i_0 = ArgMax_i\{ SNIR(i) = \hat{r}_{xd}(i)^{H}\hat{R}^{-1}\hat{r}_{xd}(i)\}.$$

8. Method for receiving a signal and for rejecting interferences according to one of the preceding claims, wherein said single-channel equalization is carried out on the basis of an estimation of the single-channel propagation pathway $\boldsymbol{g}$ given by the formula $\boldsymbol{g} = \omega^{H}\hat{H}$, where $\hat{H}$ is a multisensor pathway matrix estimated according to the formula $\hat{H} = \hat{R}_{XD}R_{DD}{}^{-1}$.

9. Method for receiving a signal and for rejecting interferences according to one of the preceding Claims 1 to 8, wherein said multichannel filtering is a spatial filtering.

10. Method for receiving a signal and for rejecting interferences according to one of the preceding Claims 1 to 8, wherein the said multichannel filtering is a spatio-temporal filtering, the method furthermore comprising a step (601) of determining at least one delay $\tau_j$ associated with a multiple path $j$ of the signal received, and a step (602) of forming a spatio-temporal multichannel signal vector on the basis of the said discretized and synchronized signal and of the said discretized and synchronized signal delayed by said delay or delays $\tau_j$, wherein steps (503) of computing a correlation matrix $\hat{R}$ of the total noise, and (505) of applying a multichannel filtering processing taking the said spatio-temporal multichannel signal as synchronized and discretized multichannel signal.

11. Multichannel receiver configured to receive a signal on a plurality of channels and to reject interferences, comprising:

   • at least two radio chains (121, 122), for the reception, transposition and discretization of said signal received on each of the channels of the receiver (111, 112), so as to obtain a discretized multichannel signal, and
   • computation circuits (130) configured to synchronize (140) said discretized multichannel signal,

   said receiver being **characterized in that** the computation circuits (130) are furthermore configured to:

   • compute, on the basis of the discretized and synchronized multichannel signal, a correlation matrix $\hat{R}$ of the total noise,
   • compute an intercorrelation matrix $\hat{R}_{XD}$ between a learning sequence and the discretized and synchronized multi-channel signal received,
   • compute, on the basis of the matrix $\hat{R}_{XD}$, an estimate of the direction vector associated with a path,
   • compute, on the basis of said correlation matrix $\hat{R}$ of the total noise and of the estimate of the directing vector associated with a path, a vector **w** comprising amplitude phase weighting coefficients (221, 222) of a multichannel filter, and
   • apply, to the discretized and synchronized multichannel signal, a multichannel filtering processing (201) on the basis of said vector w and of a single-channel equalization processing (202) to the filtered signal.

100

P  N

101  102  101

Art Antérieur

Fig. 1a

112  111  110

121  130

Chaine radio

Chaine radio

Synchronisation

Filtrage et
Egalisation

Décodage

122  140  150  160

Art Antérieur

Fig. 1b

EP 3 343 784 B1

Fig. 2

Fig. 3

22

Fig. 4

```
┌─────────────────────────────────────┐
│   Réception, transposition et        │ ⌐ 501
│         discrétisation               │
└─────────────────────────────────────┘
                   │
                   ▼
┌─────────────────────────────────────┐
│          Synchronisation             │ ⌐ 502
└─────────────────────────────────────┘
                   │
                   ▼
┌─────────────────────────────────────┐
│  Calcul d'une matrice de corrélation du │ ⌐ 503
│            bruit total               │
└─────────────────────────────────────┘
                   │
                   ▼
┌─────────────────────────────────────┐
│  Calcul des coefficients d'un filtre spatial │ ⌐ 504
└─────────────────────────────────────┘
                   │
                   ▼
┌─────────────────────────────────────┐
│  Filtrage spatial et égalisation monovoie │ ⌐ 505
└─────────────────────────────────────┘
```

Fig. 5

Réception, transposition et discrétisation — 501

Synchronisation — 502

Calcul d'au moins un retard — 601

Formation d'un signal multivoies spatio-temporel — 602

Calcul d'une matrice de corrélation du bruit total — 503

Calcul des coefficients d'un filtre spatio-temporel — 504

Filtrage spatio-temporel et égalisation monovoie — 505

Fig. 6

## RÉFÉRENCES CITÉES DANS LA DESCRIPTION

**Documents brevets cités dans la description**

- EP 0867079 B1
- US 6118832 A
- EP 0665665 B1